# EUROPEAN PATENT SPECIFICATION

(11) **EP 3 241 445 B1**
(45) Date of publication and mention of the grant of the patent: **16.10.2019**
(21) Application number: 17169603.2
(22) Date of filing: 04.05.2017
(51) Int. Cl.: A22C 11/02

(54) **SAUSAGE CASING STUFFER FOR STUFFING MACHINE**
VORRICHTUNG ZUM AUFZIEHEN VON HÜLLEN FÜR EINE WURSTFÜLLMASCHINE
DISPOSITIF D'ALIMENTATION DE BOYAUX POUR UNE MACHINE DE REMPLISSAGE DE SAUCISSES

(30) Priority: 05.05.2016 ES 201630588
(43) Date of publication of application: 08.11.2017
(73) Proprietor: Comercial Eliseo Andujar, S.L., 13600 Alcázar de San Juan (Ciudad Real) (ES)
(72) Inventor: Andújar Vila, Eliseo, 13600 Alcázar de San Juan (Ciudad Real) (ES); Andújar Vila, David, 13600 Alcázar de San Juan (Ciudad Real) (ES); Andújar Vila, Juan, 13600 Alcázar de San Juan (Ciudad Real) (ES)
(74) Representative: Martin Santos, Victoria Sofia

(56) References cited:
- EP-A1- 0 022 570
- DE-U1- 8 614 113
- Eurocarne.Com: "Eurocarne Digital - Ficha de novedades - Andher presentó en Bta. el sistema ADT-80, un alimentador de tripas naturales para embutidoras. Cuenta con un rodillo alimentador único patentado que se ajusta al diámetro del embudo para conseguir la mejor tracción.", , 8 June 2015 (2015-06-08), XP055376585, Retrieved from the Internet: URL:http://www.eurocarne.com/novedades-fic has?id=2680 [retrieved on 2017-05-29]
- KurtSchaffnerAG: "Darmaufziehmaschine DA 2003 Salami", YouTube, 9 May 2011 (2011-05-09), pages 1-1, XP054977397, Retrieved from the Internet: URL:https://www.youtube.com/watch?v=T6DbDQ PSzAQ [retrieved on 2017-05-31]

## Description

### Object of the invention

The object of the present invention is a machine conceived, designed and constructed to carry out the task of mechanically loading or introducing all kinds of natural animal or artificial casings into the tube forming part of the stuffing horn or funnel of a stuffing machine intended for making sausages.

### Background of the invention

The manufacture of sausages, such as hot dogs, wieners, chorizos, pork sausages, blood sausages, or other types of fillings, is performed with a machine called a stuffer that is essentially responsible of pushing, the ground meat mix, under pressure through a stuffer horn to fill into the chosen sausage casings, that can be of animal or artificial origin. On the outside of the stuffer horn tube, the sausage casing is inserted to be filled with the chosen ground meat mix, this loading of the sausage casing or outer shell can be done manually or by means of a stuffer.

Non-patent document XP055376585, entitled "Eurocarne.com", discloses an internet page www.eurocarne.com/novedades-fichas?id=2680, showing the applicant's prior art casing stuffer according to the preamble of claim 1.

Other prior art stuffers are also known from patent documents EP022570-A1 and DE8614113-U1.

The sausage casing stuffers available on the market have the main drawback that they only operate with a particular determined distance between stuffer toothed wheels; hence, being the purpose of this invention, having the possibility of adjusting the distance between said toothed wheels, thus having the chance to adjust to the diameter of the tube of the stuffer horn.

The present invention proposes a sausage casing stuffer which automates the process of inserting the sausage casing into the stuffer horn tube, which can be very easily adapted to different diameters of the stuffer horn tubes, and to different stuffing machines, regardless of their constitution.

### Description of the invention

The invention relates to a sausage casing stuffer for a stuffing machine according to claim 1. Further preferred embodiments are defined in the dependent claims.

### Brief description of the drawings

Figure 1: shows an elevational view of the sausage casing stuffer for stuffing machine, once it is mounted with the joint means on a worktop.
Figure 2: shows an elevation view of the sausage casing stuffer for stuffing machine, in which the stuffer horn with its corresponding tube can be seen.
Figure 3: shows two views of the casing pulling device, one in a fully closed position, and another showing an example with the optimal separation for the optimal gripping of the conical toothed wheels to the tube of the stuffer horn of the stuffer.
Figure 4: shows an exploded view of the sausage casing pulling device; a first image shows the decoupling of the device with the driving shaft, a second image shows the process for disengaging the toothed wheels, and a third image shows the casing pulling device completely disengaged.

### Preferred embodiment

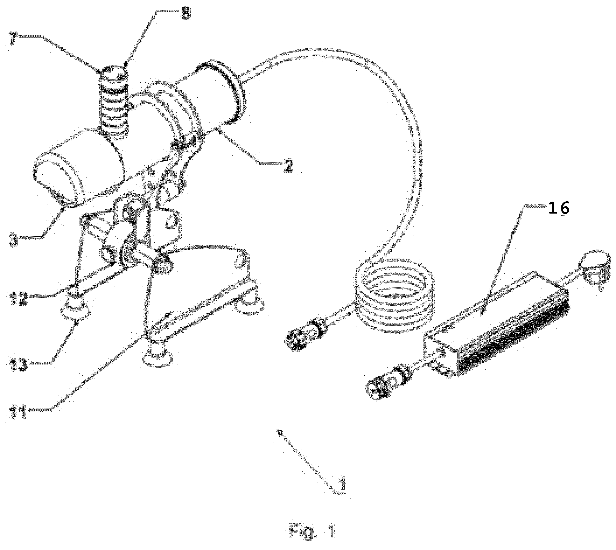

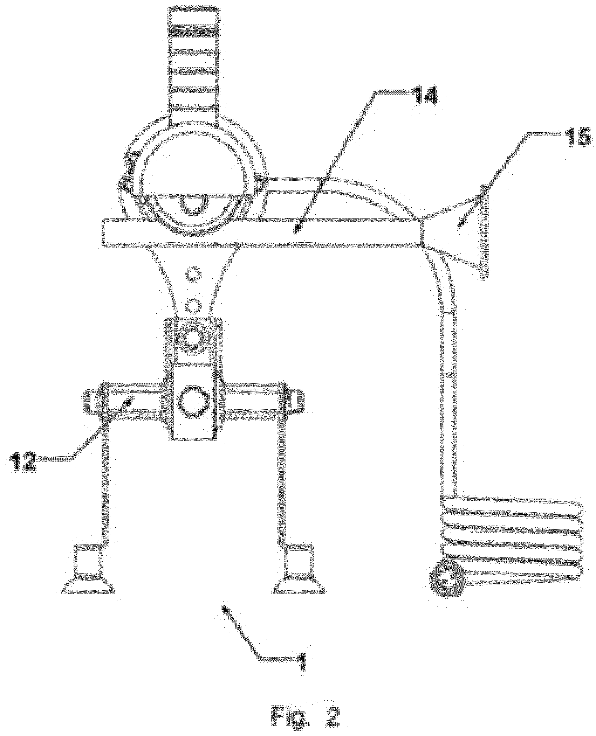

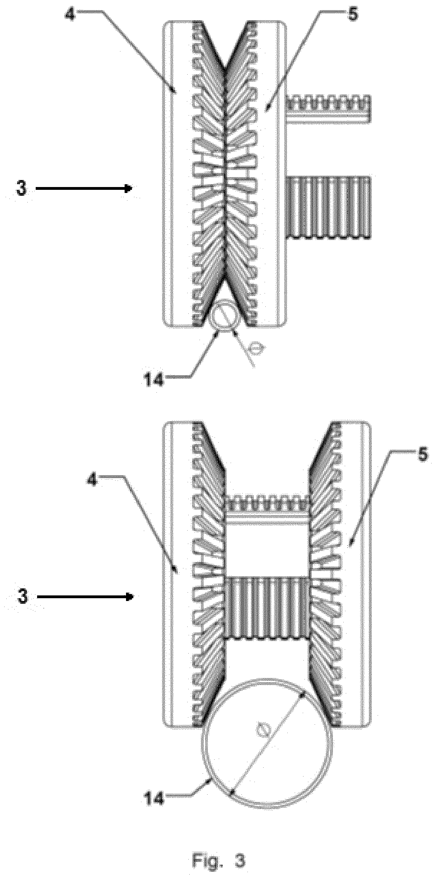

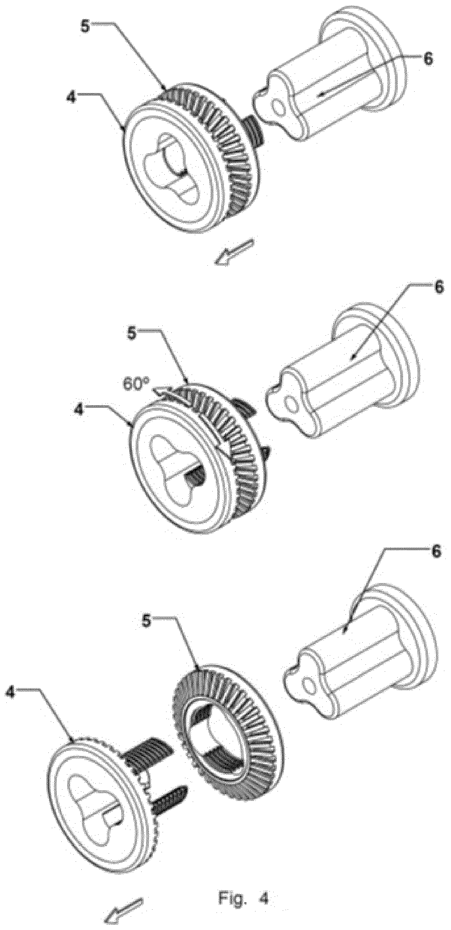

Figures 1 to 4 show a preferred embodiment of the sausage casing stuffer for stuffing machine (1) object of the present disclosure.

The sausage casing stuffer (1) for stuffing machine comprises a housing (2) of approximately cylindrical shape and a sausage casing pulling device (3) for inserting the sausage casing into the tube of the stuffer horn of a stuffer, which is axially disposed in one end of said housing (2), comprising two identical conical toothed wheels (4 and 5), with the toothed faces oppose to each other. Said conical toothed wheel (4) is extended by the slotted area on which the distance between both wheels (4 and 5) is adjusted.

Inside and approximately parallel to the longitudinal axis of the housing (2) the drive shaft (6) and the pulling device (3) are connected. The design of the pulling device (3) makes it possible to disengage said conical toothed wheels (4 and 5) by rotating 60° the wheel (5) with respect to the other wheel (4) so as to be able to vary and adjust the axial distance between them. Once the ideal distance for the adjustment with the tube (14) of the stuffer horn (15) has been selected, by turning the wheel (5) another 60° in any direction, it (wheel 5) becomes fixed with the other wheel (4). This action allows the sausage casing pulling device to adjust to the different diameters of the tubes (14) of the stuffer horn (15) which vary depending on the different models of stuffing machines, and with the different sausage products to be obtained.

A direct-current electrical motor is arranged inside the housing (2) and is adapted to actuate by means of said drive shaft (6) of the pulling device (3).

A base (11) having articulating joint means (12) with said housing (2), and fixing means preferably of the suction cup type (13) to fix it at will, to a surface independent from the stuffer; said articulating joint means (12) allow the rotation of the housing with respect to an horizontal axis and perpendicular to the longitudinal axis of said housing, and also allow rotation with respect to an axis parallel to the longitudinal axis of the housing (2); said joint means comprise a horizontal axis disposed perpendicular to the theoretical longitudinal axis of the housing and its corresponding bearing, and an axis disposed parallel to said theoretical longitudinal axis of the housing and its corresponding bearing.

In order to facilitate that the sausage casing pulling device, comes closer or away from the tube of the stuffer horn, a handle (7) is provided on the outer surface of the housing, which has an actuation system for activating the electrical motor, preferably a switch (8), for controlling the direct-current electrical motor. The handle allows the housing (2) to oscillate until said sausage casing pulling device (3) engages in contact with the tube of the stuffer horn. The power source (16) of the direct-current electrical motor is disposed outside the said housing (2) and it is electrically connected to the switch (8) and to the said direct-current motor.

The said switch can be manually operated or may be actuated automatically by a device comprising an inductive sensor and a metal ball that can move parallel to the theoretical axis of the housing, in such way that when the housing is turned to its working position, the ball travels and said displacement is captured by the inductive sensor that sends an electrical signal to the said switch for activation, when the housing is turned to the its rest position the ball travels in the opposite direction, and the inductive sensor captures this displacement and sends another electrical signal to the switch in order to deactivate it.

In order to facilitate its use with different types of stuffing machines and on different work tops or tables, the base can have two or more connecting means to the joint means between the base (11) and the housing (2). Each of said connecting means is located at a different height and the articular joint means allow the position of the housing (2) to be adjusted axially and in height, with respect to the base, allowing these two characteristics to modify the height and the axial position of the sausage casing pulling device with respect to the position of the base (11) or to the afore mentioned connection.

The conical toothed wheels are made of an elastomer suitable for food contact.

The operation of the sausage casing pulling device is as follows, firstly the base (11) is adjusted and fixed by means of suction cups (13) to a work table. Then, the axial position and height of the sausage casing pulling device is adjusted, and afterwards the distance between the conical toothed wheels is adjusted until the stuffer horn tube is between the two wheels. After manually inserting a small portion of the sausage casing into the tube of the stuffer horn, the housing (2) is oscillated until the conical toothed wheels come into contact with the sausage casing, and then the switch is manually or automatically actuated after the oscillation and until all the sausage casing is inserted in the stuffer horn tube. Once all the sausage casing is inserted, the housing oscillates to its initial position.

## Claims

1. A sausage casing stuffer (1) for a stuffing machine, comprising:
• a housing (2) with approximately cylindrical shape;
• a sausage casing pulling device (3) for inserting a sausage casing into a stuffer horn tube, said device (3) being attached to a drive shaft (6) disposed at one end of said housing (2), and comprising two identical conical toothed wheels (4, 5), with their toothed faces opposing each other;
• a direct-current electrical motor arranged inside the housing (2), adapted to actuate the sausage casing pulling device (3) by means of said drive shaft (6);
• a handle (7) disposed on the outer surface of the housing, with an actuation system for controlling the direct-current electrical motor;
• a waterproof power supply (16) for the direct-current electrical motor arranged in the exterior of the said housing and electrically connected to the actuation system at will, and to said direct-current electrical motor;
• a control unit, arranged on the power supply source (16), to control at will, the voltage supplied by the power supply to the direct-current motor in order to regulate the speed of rotation and the torque of the direct-current electrical motor;
• a base (11) having articulating joint means (12) to the housing, and having fixing means (13) to fix it at will to a surface independent from the stuffer;
said articulating joint means (12) allowing the rotation of the housing (2) with respect to said base, and comprising an axis that is horizontal and perpendicular to the longitudinal axis of the housing and its corresponding bearing,
and an axis parallel to the longitudinal axis of said housing, so that the housing (2) can rotate on both axes,
**characterised in that**:
the pulling device is configured such that when disengaging the pulling device (3) from the drive shaft (6), said conical toothed wheels (4, 5) may rotate 60° one with respect to the other so as to be able to vary and adjust the axial distance between them, in order to adjust said distance to the diameter of the tube of the stuffer horn of the stuffing machine.

2. A sausage casing stuffer for a stuffing machine, according to claim 1, **characterized in that** the fixing means (13) to fix its base at will to a surface independent from the stuffer, are of the suction cup type.

3. A sausage casing stuffer for a stuffing machine, according to claims 1 or 2, **characterized in that** the base (11) can have two or more connecting means to connect with the joint means between the base and the housing, each of said connecting means is located at a different height.

4. A sausage casing stuffer for a stuffing machine according to any of the preceding claims, **characterized in that** at least the drive shaft (6), the sausage casing pulling device (3), and the conical toothed wheels (4, 5) are made of an elastomer suitable for food contact.

5. A sausage casing stuffer for a stuffing machine according to any one of the preceding claims, **characterized in that** the actuation system is a switch (8).

6. A sausage casing stuffer for a stuffing machine according to claim 5, **characterized in that** the actuation system switch (8) is manually or automatically actuated.

7. A sausage casing stuffer for a stuffing machine according claim 5, **characterized in that** the switch (8) is activated by means of a device comprising a metal ball adapted to move parallel to the theoretical longitudinal axis of the housing and an inductive sensor which captures the movement of said metal ball, and by means of electrical signals activates or deactivates said switch.

## Patentansprüche

1. Wursthüllenfüllvorrichtung (1) für eine Füllmaschine, umfassend:
• ein Gehäuse (2) in etwa zylindrischer Form;
• eine Wursthüllenzieheinrichtung (3) zum Einsetzen einer Wursthülle in ein Füllhornrohr, wobei die Einrichtung (3) an einer an einem Ende des Gehäuses (2) angeordneten Antriebswelle (6) befestigt ist und zwei identische konische Zahnräder (4, 5) umfasst, deren Zahnflächen einander gegenüber liegen;
• einen Gleichstrommotor, der innerhalb des Gehäuses (2) angeordnet und dazu ausgelegt ist, die Wursthüllenziehvorrichtung (3) mittels der Antriebswelle (6) zu betätigen;
• einen Griff (7), der an der Außenfläche des Gehäuses angeordnet ist, mit einem Betätigungssystem zum Steuern des Gleichstrommotors;
• eine wasserdichte Stromversorgung (16) für den Gleichstrommotor, die im Äußeren des Gehäuses angeordnet und nach Belieben mit dem Betätigungssystem und mit dem Gleichstrommotor elektrisch verbunden ist;
• eine Steuereinheit, die an der Energieversorgungsquelle (16) angeordnet ist, um die von der Energieversorgung des Gleichstrommotors gelieferte Spannung nach Belieben zu steuern, um die Drehzahl und das Drehmoment des Gleichstrommotors zu regeln;
• eine Basis (11) mit Gelenkver-bindungsmitteln (12) an dem Gehäuse und mit Befestigungsmitteln (13), um es nach Belieben an einer vom Füllmaterial unabhängigen Oberfläche zu befestigen, wobei die Gelenkverbindungsmittel (12) die Drehung des Gehäuses (2) in Bezug auf die Basis ermöglichen und eine Achse, die horizontal und senkrecht zur Längsachse des Gehäuses und seines entsprechenden Lagers verläuft, und eine Achse parallel zur Längsachse des Gehäuses umfassen, so dass das Gehäuse (2) um beide Achsen drehbar ist,
lesdits moyens d'articulation (12) permettent la rotation du boitier (2) par rapport à ladite base, et comprenant un axe qui est horizontal et perpendiculaire à l'axe longitudinal du boitier et à son roulement correspondant,
et un axe parallele à l'axe longitudinal dudit boîtier, de teile sorte que le boitier (2) peut tourner sur les deux axes;
**dadurch gekennzeichnet, dass**:
die Zieheinrichtung so konfiguriert ist, dass beim Auskuppeln der Zieheinrichtung (3) von der Antriebswelle (6) die konischen Zahnräder (4, 5) sich 60° zueinander drehen können, um den axialen Abstand zwischen ihnen variieren und einstellen zu können, um den Abstand an den Durchmesser des Rohres des Füllhorns der Füllmaschine anzupassen.

2. Wursthüllenfüllvorrichtung für eine Füllmaschine nach Anspruch 1, **dadurch gekennzeichnet, dass** die Befestigungsmittel (13) zum Befestigen ihrer Basis nach Belieben an einer vom Füllgerät unabhängigen Oberfläche vom Saugnapf-Typ sind.

3. Wursthüllenfüllvorrichtung für eine Füllmaschine nach Anspruch 1 oder 2, **dadurch gekennzeichnet, dass** die Basis (11) zwei oder mehr Verbindungsmittel aufweisen kann, um mit den Verbindungsmitteln zwischen der Basis und dem Gehäuse eine Verbindung einzugehen, wobei sich jedes der Verbindungsmittel auf einer anderen Höhe befindet.

4. Wursthüllenfüllvorrichtung für eine Füllmaschine nach einem der vorstehenden Ansprüche, **dadurch gekennzeichnet, dass** zumindest die Antriebswelle (6), die Wursthüllen-Zieheinrichtung (3) und die konischen Zahnräder (4, 5) aus einem für den Lebensmittelkontakt geeigneten Elastomer bestehen.

5. Wursthüllenfüllvorrichtung für Füllmaschinen nach einem der vorhergehenden Ansprüche, **dadurch gekennzeichnet, dass** das Betätigungssystem ein Schalter (8) ist.

6. Wursthüllenfüllvorrichtung für eine Füllmaschine nach Anspruch 5, **dadurch gekennzeichnet, dass** der Schalter (8) des Betätigungssystems manuell oder automatisch betätigt wird.

7. Wursthüllenfüllvorrichtung für eine Füllmaschine nach Anspruch 5, **dadurch gekennzeichnet, dass** der Schalter (8) mittels einer Vorrichtung betätigt wird, die eine Metallkugel umfasst, die dazu ausgelegt ist, sich parallel zur theoretischen Längsachse des Gehäuses zu bewegen, und einen induktiven Sensor, der die Bewegung der Metallkugel erfasst, und mittels elektrischer Signale den Schalter aktiviert oder deaktiviert.

## Revendications

1. Dispositif de remplissage de boyaux (1) pour une machine de bourrage, comprenant:
• un boîtier (2) de forme approximativement cylindrique ;
• un dispositif de traction de boyau de saucisse (3) pour insérer le boyau de saucisse dans un tube de remplissage en forme de cornet, ledit dispositif (3) étant fixé à un arbre d'entraînement (6) disposé à une extrémité dudit boîtier (2), et comprenant deux roues dentées coniques identiques (4, 5), leurs faces dentées étant opposées l'une à l'autre;
• un moteur électrique à courant continue disposé à l'intérieur du boîtier (2), adapté pour actionner le dispositif de traction de boyau de saucisse (3) par ledit arbre d'entraînement (6);
• une poignée (7) disposée sur la surface extérieure du boîtier, avec un système d'actionnement pour contrôler le moteur électrique à courant continue;
• une alimentation électrique hydrofuge (16) pour le moteur électrique à courant continue mise à l'extérieur dudit boîtier et connectée à volonté électriquement au système d'actionnement, et audit moteur électrique à courant continue;
• une unité de contrôle, disposée sur la source d'alimentation électrique (16), permettant de contrôler à volonté la tension fournie par l'alimentation au moteur à courant continue afin de réguler la vitesse de rotation et le couple du moteur électrique à courant continue;
• une base (11) ayant des moyens de d'articulation joints (12) au boîtier, et ayant des moyens de fixation (13) pour la fixer à volonté à une surface indépendante à la machine de bourrage;
lesdits moyens d'articulation (12) permettent la rotation du boîtier (2) par rapport à ladite base, et comprenant un axe qui est horizontal et perpendiculaire à l'axe longitudinal du boîtier et à son roulement correspondant,
et un axe parallèle à l'axe longitudinal dudit boîtier, de telle sorte que le boîtier (2) peut tourner sur les deux axes,
**caractérisé en ce que**:
le dispositif de traction est configuré de telle sorte que, lorsque en désengageant le dispositif de traction (3) à partir de l'arbre d'entraînement (6), lesdites roues dentées coniques (4, 5) peuvent tourner de 60° l'un par rapport à l'autre de façon à pouvoir varier et ajuster la distance axiale entre elles, pour en régler ladite distance axiale, par rapport au diamètre du tube de remplissage en forme de cornet de la machine de bourrage.

2. Dispositif de remplissage de boyaux pour une machine de bourrage selon la revendication 1, **caractérisé en ce que** les moyens de fixation (13) permettant de fixer à volonté sa base sur une surface indépendante à la machine de bourrage sont du type ventouse.

3. Dispositif de remplissage de boyaux pour une machine de bourrage selon la revendication 1 ou 2 **caractérisé en ce que** la base (11) peut avoir deux ou plus des moyens de jonction pour connecter la base et le boîtier, chacun desdits moyens de connexion étant situé à une hauteur différente.

4. Dispositif de remplissage de boyaux pour une machine de bourrage, selon l'une quelconque des revendications précédentes, **caractérisé en ce qu'**au moins l'arbre d'entraînement (6), le dispositif de traction de boyau à saucisses (3) et les roues dentées coniques (4, 5) sont faites d'un élastomère approprié au contact alimentaire.

5. Dispositif de remplissage de boyaux pour une machine de bourrage, selon l'une quelconque des revendications précédentes, **caractérisé en ce que** le système d'actionnement est un interrupteur (8).

6. Dispositif d'alimentation de boyaux pour une machine de bourrage, selon la revendication 5, **caractérisé en ce que** l'interrupteur du système d'actionnement (8) est actionné manuellement ou automatiquement.

7. Dispositif d'alimentation de boyaux pour une machine de bourrage selon la revendication 5, **caractérisé en ce que** l'interrupteur (8) est activé au moyen d'un dispositif comprenant une bille métallique adaptée pour se déplacer parallèlement à l'axe longitudinal théorique du boîtier et un capteur inductif qui capture le mouvement de ladite bille métallique, et par des signaux électriques, active ou désactive ledit interrupteur.
